# EUROPÄISCHE PATENTANMELDUNG

(11) **EP 3 275 588 A1**
(43) Veröffentlichungstag der Anmeldung: **31.01.2018**
(21) Anmeldenummer: 17182198.6
(22) Anmeldetag: 19.07.2017
(51) Int. Cl.: B23Q 1/00, B23B 31/28, B23B 31/16

(54) **SPANN- ODER WECHSELSYSTEM**

(30) Priorität: 29.07.2016 DE 102016114126
(71) Anmelder: Schunk GmbH & Co. KG Spann- und Greiftechnik, 74348 Lauffen am Neckar (DE)
(72) Erfinder: WEISER, Matthias, 88348 Bad Saulgau (DE); SCHRÄDER, Philipp, 88512 Mengen-Blochingen (DE); WILD, Marc, 72505 Krauchenwies (DE)
(74) Vertreter: DREISS Patentanwälte PartG mbB

(57) **Zusammenfassung**

Die Erfindung betrifft ein Spann- oder Wechselsystem, insbesondere Nullpunktspannsystem, mit einem Gehäuse zur Aufnahme eines Aufnahmeelements, mit in radialer Richtung hin zu einer Mittellängsachse im Gehäuse geführt verlagerbaren Verrieglungskörpern, die in einer Verriegelungslage gegen das Aufnahmeelement so wirken, dass ein am Aufnahmeelement anordenbares Trägerteil in axialer Richtung gegen das Gehäuse beaufschlagt wird, und mit einem die Verrieglungskörper betätigenden, um die Mittellängsachse (18) verdrehbar angeordneten Treibring, wobei im Gehäuse ein Elektromotor mit einer Antriebswelle vorgesehen ist, wobei die Antriebswelle zur Verdrehung des Treibrings mit dem Treibring drehgekoppelt ist.

## Beschreibung

Die Erfindung betrifft ein Spann- oder Wechselsystem, insbesondere ein Nullpunktspannsystem, mit einem Gehäuse zur Aufnahme eines Aufnahmeelements, mit in radialer Richtung hin zu einer Mittellängsachse im Gehäuse geführt verlagerbaren Verriegelungskörpern, die in einer Verriegelungslage gegen das Aufnahmeelement so wirken, dass ein am Aufnahmeelement anordenbares Trägerteil in axialer Richtung gegen das Gehäuse beaufschlagt wird, und mit einem die Verriegelungskörper betätigenden, um die Mittellängsachse verdrehbar angeordneten Treibring.

Derartige Spann- oder Wechselsysteme, und insbesondere ein derartiges Nullpunktspannsystem, ist aus der DE 10 2010 010 898 B4 bekannt. Das Aufnahmeelement ist dabei als Spannbolzen ausgeführt, der in eine Spannaufnahme einführbar und dort mit den Verriegelungskörpern, die als Spannschieber oder Kugeln ausgebildet sind, verriegelbar ist. Beim Verriegeln wird dabei der Spannbolzen in die Aufnahme eingezogen, so dass das zu spannende Teil in axialer Richtung gegen das Gehäuse positionssicher beaufschlagt wird. Gemäß der Gattung des Patentanspruchs 1 kann das Aufnahmeelement beispielsweise auch ringartig ausgebildet sein, wobei dann das Gehäuse wenigstens abschnittsweise in das Aufnahmeelement eintaucht und die Verriegelungskörper dann zum Spannen nach radial außen verlagert werden.

Die Erfindung kann nicht nur ein Spannsystem, sondern auch ein Wechselsystem betreffen. In diesem Fall ist das Gehäuse als Wechselkopf mit den Verriegelungskörpern ausgebildet, wobei das am Wechselkopf zu spannende Trägerteil dann beispielsweise als ein Werkzeug oder eine Handhabungseinheit tragender Adapter ausgebildet ist. Wechselsysteme können insbesondere bei Robotern Verwendung finden, wobei mit diesen ein schnelles und einfaches Wechseln von beispielweise Greifern, Werkzeugen oder anderen Effekturen am Front-Ende des Roboters erfolgen kann.

Bei dem aus der DE 10 2010 010 898 B4 beschriebenen Spannsystem wird der Treibring mittels tangential zum Treibring angeordneten, druckbeaufschlagbaren Kolben in die jeweilige Drehstellung verlagert. Das Vorsehen von druckbeaufschlagbaren Kolben setzt zwangsläufig Druckanschlüsse oder Hydraulikanschlüsse voraus sowie ein zugehöriges Druckluftsystem oder Hydrauliksystem.

Der Erfindung liegt nunmehr die Aufgabe zugrunde, ein eingangs genanntes Spann- oder Wechselsystem und ein solches System auch dann bereitstellen zu können, wenn keine Druckluft- oder Hydrauliksysteme verfügbar sind.

Diese Aufgabe wird mit einem Spann- oder Wechselsystem mit den Merkmalen des Anspruchs 1 gelöst. Insbesondere ist vorgesehen, dass im Gehäuse ein Elektromotor mit einer Antriebswelle vorgesehen ist, wobei die Antriebswelle zur Verdrehung des Treibrings mit dem Treibring drehgekoppelt ist. Die Drehkopplung kann dabei unmittelbar oder mittelbar, beispielsweise über das Vorsehen von Getriebestufen, erfolgen. Dadurch, dass der Elektromotor im Gehäuse vorgesehen ist, und dadurch, dass der Elektromotor den Treibring antreibt, können die Verriegelungskörper sicher zwischen der Verriegelungslage und der Entriegelungslage verlagert werden. Da der Verstellwinkel des Treibrings in der Regel zwischen 10° und 25° liegt, um die Verriegelungskörper aus der Verriegelungslage in die Verriegelungslage zu betätigen, kann ein vergleichsweise klein bauender Elektromotor zum Einsatz kommen. Eine Bestromung des Elektromotors ist auch nur dann erforderlich, wenn das System verriegelt bzw. entriegelt werden soll. Insofern muss auch nur dann entsprechende elektrische Energie bereitgestellt werden. Beim Vorsehen von Pneumatik- oder Hydrauliksystemen ist pneumatische oder hydraulische Energie stets bereitzustellen, wodurch hier insgesamt der Energiebedarf wesentlich höher ist.

Eine vorteilhafte Ausbildung ergibt sich dann, wenn die Antriebswelle des Elektromotors parallel oder rechtwinklig zur Drehachse oder in der Drehachse des Treibrings verlaufend angeordnet ist. Ein Anordnen der Antriebswelle beabstandet zur Drehachse des Treibrings kann insbesondere dann Sinn machen, wenn im Gehäuse neben dem Elektromotor noch weitere Komponenten vorgesehen sind.

Ein besonders klein bauendes System kann sich dann ergeben, wenn die Antriebswelle direkt mit dem Treibring drehgekoppelt ist. Vorzugsweise ist dann zwischen der Antriebswelle des Elektromotors und dem Treibring kein Getriebe vorgesehen. Je nach aufzubringenden Kräften bzw. je nach Baugröße des Systems kann es jedoch sinnvoll sein, dass die Antriebswelle über eine Untersetzungskinematik mit dem Treibring drehgekoppelt ist. Die Untersetzungskinematik kann innerhalb eines Gehäuses des Elektromotors untergebracht sein. Andererseits ist denkbar, dass sie der Antriebswelle des Elektromotors nachgeschaltet ist.

Die Untersetzungskinematik kann insbesondere am Treibring eine Innenverzahnung und ein die Innenverzahnung kämmendes Ritzel aufweisen, wobei das Ritzel vom Elektromotor, unmittelbar oder mittelbar, angetrieben wird. Die Innenverzahnung kann sich dabei vorzugsweise nur über einen Teilabschnitt des Treibrings erstrecken, insbesondere innerhalb eines Winkelbereichs von 10° bis 20° und vorzugsweise im Bereich von 15°. Die Innenverzahnung kann dabei auch innerhalb einer am Treibring vorgesehenen, sich beispielsweise nach radial außen erstreckenden Ausnehmung vorgesehen sein.

Ferner ist denkbar, dass die Untersetzungskinematik eine erste Getriebestufe und eine zweite Getriebestufe umfasst, wobei die beiden Getriebestufen fluiddicht voneinander getrennt angeordnet sind. Dies hat den Vorteil, dass sichergestellt ist, dass zumindest die Getriebestufe, die der Antriebswelle näher liegt, von der Getriebestufe, die den Treibring näher liegt, abgedichtet ist. Ein Eindringen von Feuchtigkeit, Flüssigkeiten oder Schmutzpartikeln in die dem Elektromotor nahe gelegene Getriebestufe ist damit ausgeschlossen.

Dabei kann vorgesehen sein, dass das Gehäuse eine Motoraufnahme aufweist, wobei der Elektromotor oder der Elektromotor und wenigstens eine Getriebestufe, in der Motoraufnahme fluidisch abgedichtet untergebracht sind. Damit kann sichergestellt werden, dass der Elektromotor und ggf. eine zugehörige Getriebestufe sicher im Gehäuse untergebracht ist. Insbesondere kann die Anordnung so sein, dass die Schutzart IP67, oder eine höherrangige Schutzart, erreicht wird.

Eine weitere Ausbildung sieht vor, dass das Gehäuse wenigstens drei Grundabschnitte aufweist: Einen Aufnahmeabschnitt mit der Aufnahme für zu spannende Aufnahmeelemente, einen Grundabschnitt und einen Deckelabschnitt, wobei der Treibring zwischen dem Aufnahmeabschnitt und dem Grundabschnitt angeordnet ist, und wobei die Motoraufnahme im Grundabschnitt vorgesehen und mit dem Deckelabschnitt verschließbar ist. Hierdurch ergibt sich ein System, das zum einen kompakt baut und zum anderen dennoch funktionssicher und insbesondere auch dicht verschließbar ist.

Der Treibring als solcher kann dabei ein- oder mehrteilig ausgebildet sein. Insbesondere ist denkbar, dass der Treibring ein Hohlrad, das eine Verzahnung aufweist, welche das vom Elektromotor angetriebene Ritzel kämmt, sowie ein Treibrad umfasst, welches letztlich die Verriegelungskörper betätigt.

Eine weitere vorteilhafte Ausgestaltung ergibt sich dann, wenn im Gehäuse eine den Elektromotor ansteuernde Elektronikeinheit untergebracht ist. Die Elektronikeinheit kann dabei insbesondere innerhalb der Motoraufnahme geschützt angeordnet sein.

Ferner ist vorteilhaft, wenn der Treibring Kontaktabschnitte vorsieht, die mit Dämpfungs- und/oder Krafterhaltungsmitteln zusammenwirken. Die Kontaktabschnitte können dabei am Treibring in radialer Richtung abstehend ausgebildet sein. Die Dämpfungs- und/oder Krafterhaltungsmittel können insbesondere in im Gehäuse vorgesehenen Hohlzylindern vorgesehen sein. Die Dämpfungs- und/oder Krafterhaltungsmittel können beispielsweise Federelemente umfassen, die den Treibring insbesondere in die Verriegelungslage, in dem die Verriegelungskörper das Aufnahmeelement verriegeln, drängen. Hierdurch kann zudem sichergestellt werden, dass bei Stromlosschaltung des Elektromotors dennoch ein sicheres Verriegeln des Aufnahmeelements in der Aufnahme gewährleistet werden kann.

Einzelheiten und vorteilhafte Ausgestaltungen der Erfindung sind der nachfolgenden Beschreibung zu entnehmen, anhand derer zwei Ausführungsbeispiele der Erfindung näher beschrieben und erläutert sind. Es zeigen:
- Figur 1: eine erste Ausführungsform eines erfindungsgemäßen Spannsystems in perspektivischer Ansicht von schräg oben;
- Figur 2: einen Längsschnitt durch das Spannsystem gemäß Figur 1 in geschlossener Stellung;
- Figur 3: den Längsschnitt gemäß Figur 2 in geöffneter Stellung;
- Figur 4: den Stator des Spannsystems gemäß Figur 1 als Einzeldarstellung;
- Figur 5: den Rotor des Spannsystems gemäß Figur 1 als Einzelteildarstellung;
- Figur 6: einen Längsschnitt durch ein zweites erfindungsgemäßes Spannsystem;
- Figur 7: einen Schnitt durch das System gemäß Figur 6 entlang der Linie VII;
- Figur 8: den Elektromotor mit Hohlrad des Spannsystems gemäß Figur 6 in Einzelteildarstellung; und
- Figur 9: das Treibrad des Spannsystems gemäß Figur 6 in Unteransicht.

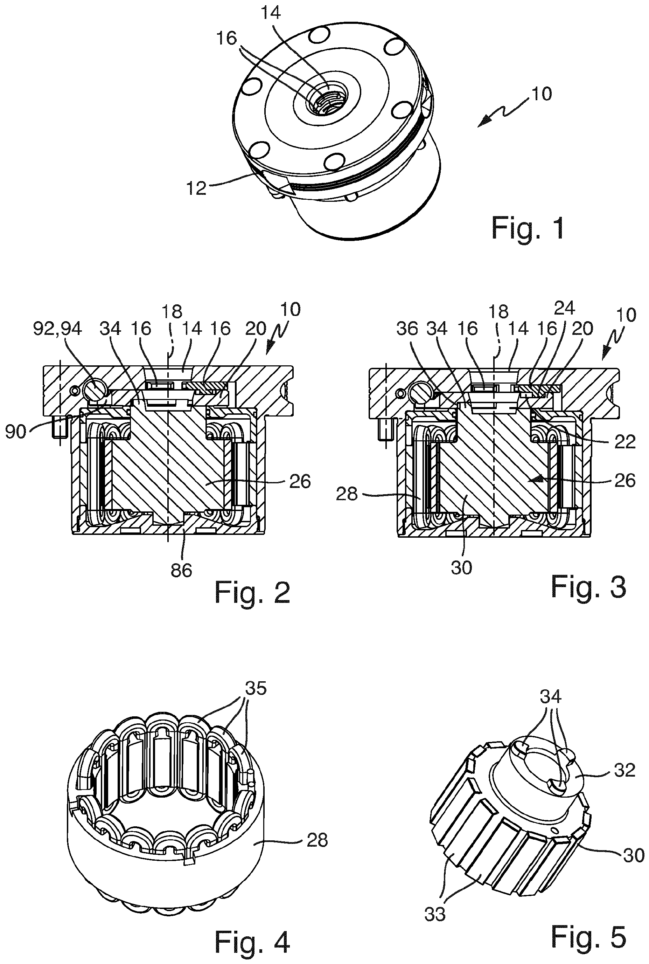

Das in den Figuren 1 bis 3 gezeigte Spannsystem 10 weist ein Gehäuse 12 auf, das an seiner Oberseite eine Spannaufnahme 14 aufweist, in welche ein Aufnahmeelement eines Trägerteils einführbar ist. Bei dem Trägerteil kann es sich dabei um ein zu spannendes und dann zu bearbeitendes Werkstück, um eine Werkstückaufnahme oder auch um einen Adapter mit einem Werkzeug oder einem Endeffektor handeln.

Wie insbesondere aus den Figuren 2 und 3 deutlich wird, sind im Gehäuse Verriegelungskörper 16 vorgesehen, die aus einer in Figur 2 gezeigten radial inneren Position (Verriegelungslage) in eine in Figur 3 gezeigte radial äußere Position (Entriegelungslage) verlagerbar sind. Zum Betätigen der Verriegelungskörper 16 ist im Gehäuse 12 ein um eine Mittellängsachse 18 verdrehbar gelagerter Treibring 20 vorgesehen. Zur Bewegungskopplung der Verriegelungskörper 16 mit dem Treibring 20 sind am Treibring 20 schräg oder gekrümmt verlaufende Nuten 22 vorgesehen, in welche an den Verriegelungskörpern 16 vorgesehene Führungsnocken 24 eingreifen. Die Nuten 22 und die Nocken 24 sind dabei derart vorgesehen, dass beim Verdrehen des Treibrings 20 um die Achse 18 die Verriegelungskörper 16 nach radial innen bzw. radial außen verlagert werden. Einzelheiten zur Bewegungskopplung zwischen dem Treibring 20 und den Verriegelungskörpern 16 können der DE 10 2010 010 898 B4 entnommen werden.

Im Gehäuse 12 ist ein Elektromotor 26 vorgesehen, der einen gehäuseseitig drehfest angeordneten Stator 28, der in Figur 4 als Einzelteil gezeigt ist, umfasst. Innerhalb des Stators 28 ist der in Figur 5 als Einzelteil gezeigte Rotor 30 vorgesehen. Der Rotor 30 sieht dabei an seiner Außenseite parallel zur Achse 18 verlaufende Permanentmagnete 33 vor. Bei Bestromung von Wicklungen 35 des Stators 28 erfolgt also eine Verdrehung des Rotors 30.

Wie aus Figur 5 deutlich wird, weist der Rotor 30 an seiner axialen Oberseite eine Antriebswelle 32 auf, welche in axialer Richtung überstehende Zapfen 34 aufweist. Zur Bewegungskopplung der Antriebswelle 32 mit dem Treibring 20 greifen die Zapfen 34 in am Treibring vorgesehene, komplementär dazu ausgebildete Zapfenaufnahmen 36 ein.

Bei dem Spannsystem 10 gemäß Figur 1 ist folglich kein Getriebe zwischen der Antriebswelle 32 des Motors 26 und dem Treibring 20 vorgesehen; die Antriebswelle 32 ist unmittelbar mit dem Treibring 20 drehgekoppelt.

Bei entsprechender Bestromung der Wicklungen 35 des Stators 28 erfolgt also über die Antriebswelle 32 des Rotors 30 ein Verdrehen des Treibrings 20, wodurch die Verriegelungskörper 16 in bzw. aus der Verriegelungslage bzw. Entriegelungslage verlagerbar sind.

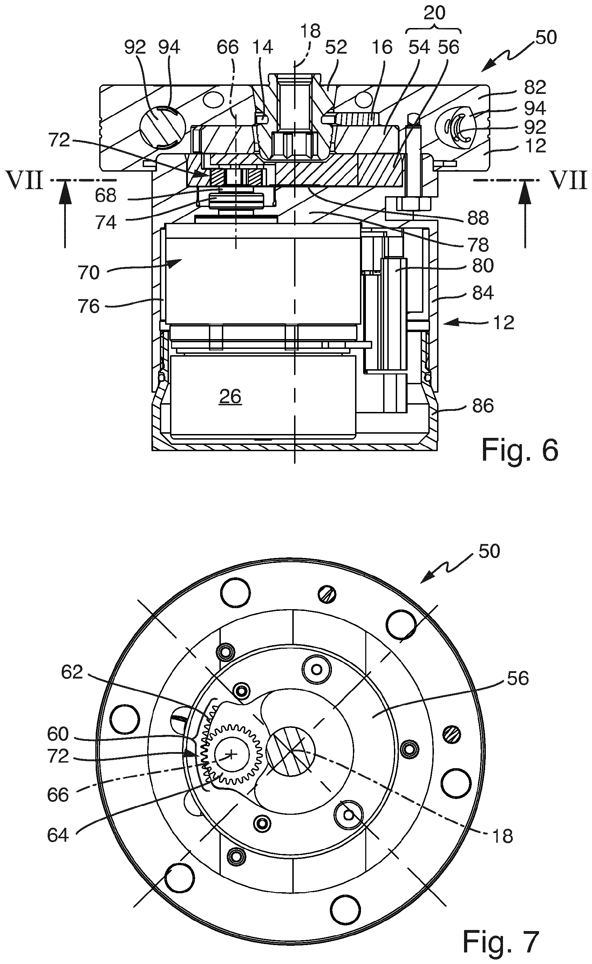

In den Figuren 6 bis 9 ist ein weiteres erfindungsgemäßes Spannsystem 50 gezeigt, wobei dem Spannsystem 10 entsprechende Bauteile mit entsprechenden Bezugszeichen gekennzeichnet sind.

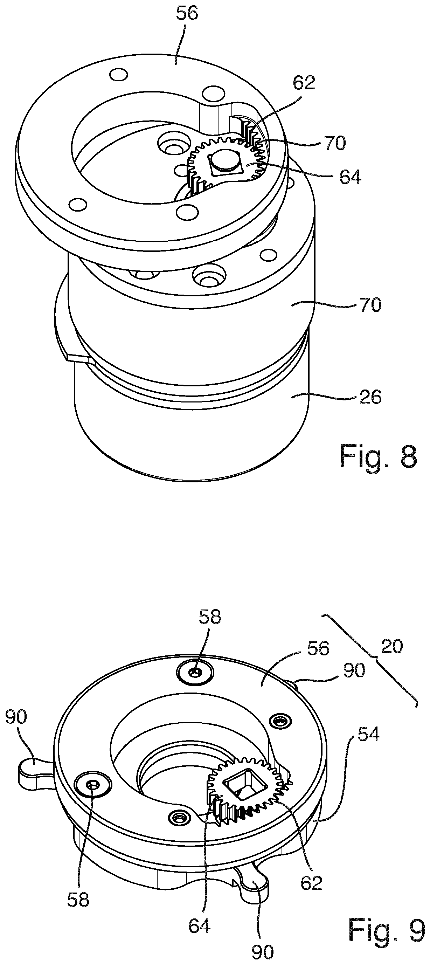

Wie aus der Figur 6 deutlich wird, ist beim Spannsystem 50 in der Spannaufnahme 14 ein Aufnahmeelement 52 eingeführt, welche mittels den Verriegelungskörpern 16 im Gehäuse 12 verriegelt werden kann. Beim Spannsystem 50 ist der Treibring 20 mehrteilig ausgebildet; er umfasst ein Hohlrad 56 sowie ein Treibrad 54. Das Hohlrad 56 ist dabei mittels Verschraubungen 58, wie aus Figur 9 deutlich wird, mit dem Treibrad 54 gefügt.

Das Hohlrad 56 weist als solches, wie aus den Figuren 7, 8 und 9 deutlich wird, einen Teilabschnitt 60 mit einer Innenverzahnung 62 auf. Der Teilabschnitt 60 erstreckt sich dabei über einen Winkelbereich von ca. 20°. Die Innenverzahnung 62 kämmt ein Ritzel 64, dessen Drehachse 66 parallel zur Achse 18 verläuft. Das Ritzel 64 wird dabei von einer Abtriebswelle 68 einer Getriebestufe 70, die insbesondere als Stirnradgetriebe ausgebildet sein kann, angetrieben. Die Getriebestufe 70 ist dabei dem Elektromotor 26 nachgeschalten; die Antriebswelle 68 des Elektromotors 26 bildet folglich die Eingangswelle der Getriebestufe 70.

Insgesamt sieht das Spannsystem 50 folglich zwei Getriebestufen vor; zum einen die Getriebestufe 70 und zum anderen eine weitere Getriebestufe 72, die vom Treibring 20 mit der Innenverzahnung 62 und vom Ritzel 64 gebildet wird.

Wie aus dem Schnitt gemäß Figur 6 deutlich wird, ist die Getriebestufe 70, die dem Elektromotor 26 nachgeschaltet die erste Getriebestufe bildet, von der Getriebestufe 72, die von der Innenverzahnung 62 des Hohlrads 56 und dem Ritzel 64 gebildet wird, fluiddicht abgetrennt. Dazu ist an der Abtriebswelle 68 eine Dichtung 74 vorgesehen. Zudem ist die erste Getriebestufe 70 samt Elektromotor 26 in einer Motoraufnahme 76 des Gehäuses 12 untergebracht. Die Motoraufnahme 76 ist dabei an ihrer dem Treibrad 54 zugewandten Seite mit einer Wandung 78 verschlossen, wobei die Abtriebswelle 68 die Wandung 78 durch die Dichtung 74 hindurch durchgreift. Insgesamt ergibt sich dabei eine fluiddichte Abdichtung hin zur Motoraufnahme 76.

Innerhalb der Motoraufnahme 76 ist zudem eine Elektronikeinheit 80 vorgesehen, welche zur Ansteuerung des Elektromotors 26 dient. Wie ebenfalls aus dem Schnitt gemäß Figur 6 deutlich wird, ist das Gehäuse 12 insgesamt dreiteilig aufgebaut. Es umfasst einen Aufnahmeabschnitt 82, in welchem die Spannaufnahme 14 vorgesehen ist. Ferner ist ein Grundabschnitt 84 und ein Deckelabschnitt 86 vorgesehen. Der Treibring 20 ist dabei zwischen dem Aufnahmeabschnitt 82 und dem Grundabschnitt 84 drehbar gelagert. Zur Reduzierung der Reibung ist ferner zwischen dem Treibring 20 und dem Grundabschnitt 84 eine Gleitscheibe 88 vorgesehen. Die Motoraufnahme 76 ist innerhalb des Grundabschnitts ausgebildet. Der Grundabschnitt 84 ist auf der dem Aufnahmeabschnitt 82 abgewandten Seite offen und nach Endmontage mit dem Deckelabschnitt 86 verschließbar. Der Deckelabschnitt 86 kann dabei insbesondere in den Grundabschnitt 84 eingeschraubt werden. Zwischen dem Deckelabschnitt 86 und dem Grundabschnitt 84 ist ebenfalls eine Dichtung vorgesehen.

Zur definierten Bewegung des Treibrings 20 bei Ansteuerung des Elektromotors 26 sind am Treibring Kontaktabschnitte 90 vorgesehen, die insbesondere in Figur 9 deutlich zu erkennen sind. Die Kontaktabschnitte 90 ragen in radialer Richtung vom Treibring 20 bzw. dessen Treibrad 54 ab. Die Kontaktabschnitte 90 werden in der endmontierten Position von Dämpfungsmitteln 92 in Form von federbeaufschlagten Kolben vorgespannt. Die Dämpfungsmittel 92 sind dabei im Aufnahmeabschnitt 82 in tangential zum Treibring 20 verlaufenden Hohlzylindern 94 angeordnet. Die Anordnung der Hohlzylinder 94 und der Dämpfungsmittel 92 ist dabei derart, dass der Treibring 20 unter Vorspannung in eine Drehrichtung beaufschlagt wird. Dadurch kann eine sichere Bewegungsführung des Treibrings erreicht werden. Zudem kann gewährleistet werden, dass bei Stromlosschaltung des Elektromotors der Treibring in eine vorbestimmte Lage gedrängt wird, insbesondere in die Verriegelungslage.

Zur Stromversorgung des Elektromotors 26 ist es denkbar, am Gehäuse einen Stecker vorzusehen. Die Steckrichtung kann dabei insbesondere parallel zur Mittellängsachse 18 verlaufen, wobei die Steckerbuchse am Grundabschnitt 84 bzw. am Aufnahmeabschnitt 82 derart vorgesehen sein, dass der Aufnahmeabschnitt 82 diese in Draufsicht abdeckt. Dadurch kann erreicht werden, dass der Stecker bzw. die Buchse keinen störenden Überstand bilden.

Die Ausbildung der Hohlzylinder sowie der Dämpfungsmittel entspricht im Wesentlichen den federbeaufschlagten Stellkolben, wie sie aus der DE 10 2010 010 898 B4 bekannt sind. Allerdings sind bei der vorliegenden Erfindung die Hohlzylinder nicht druckbeaufschlagbar.

## Patentansprüche

1. Spann- oder Wechselsystem (10, 50), insbesondere Nullpunktspannsystem, mit einem Gehäuse (12) zur Aufnahme eines Aufnahmeelements (52), mit in radialer Richtung hin zu einer Mittellängsachse (18) im Gehäuse (12) geführt verlagerbaren Verrieglungskörpern (16), die in einer Verriegelungslage gegen das Aufnahmeelement (52) so wirken, dass ein am Aufnahmeelement (52) anordenbares Trägerteil in axialer Richtung gegen das Gehäuse (12) beaufschlagt wird, und mit einem die Verrieglungskörper (16) betätigenden, um die Mittellängsachse (18) verdrehbar angeordneten Treibring (20), **dadurch gekennzeichnet, dass** im Gehäuse ein Elektromotor (26) mit einer Antriebswelle (32, 68) vorgesehen ist, wobei die Antriebswelle (32, 68) zur Verdrehung des Treibrings (20) mit dem Treibring (20) drehgekoppelt ist.

2. System (10, 50) nach Anspruch 1, **dadurch gekennzeichnet, dass** die Antriebswelle (32, 68) parallel oder rechtwinklig zur Drehachse (18) oder in der Drehachse (18) des Treibrings verlaufend angeordnet ist.

3. System (10, 50) nach Anspruch 1 oder 2, **dadurch gekennzeichnet, dass** die Antriebswelle (32, 68) direkt mit dem Treibring (20) drehgekoppelt ist.

4. System (10, 50) nach Anspruch 1 oder 2, **dadurch gekennzeichnet, dass** die Antriebswelle (32, 68) über eine Untersetzungskinematik (70, 72) mit dem Treibring (20) drehgekoppelt ist.

5. System (10, 50) nach Anspruch 4, **dadurch gekennzeichnet, dass** die Untersetzungskinematik am Treibring (20) eine Innenverzahnung (62) und ein die Innenverzahnung (62) kämmendes Ritzel (64) aufweist, wobei das Ritzel (64) vom Elektromotor (26) angetrieben wird.

6. System (10, 50) nach Anspruch 4 oder 5, **dadurch gekennzeichnet, dass** die Untersetzungskinematik eine erste Getriebestufe (70) und eine zweite Getriebestufe (72) umfasst, wobei die beiden Getriebestufen fluiddicht voneinander getrennt angeordnet sind.

7. System (10, 50) nach einem der vorhergehenden Ansprüche, **dadurch gekennzeichnet, dass** das Gehäuse (12) eine Motoraufnahme (76) aufweist, wobei der Elektromotor (26), oder der Elektromotor (26) und wenigstens eine Getriebestufe (70), in der Motoraufnahme (76) fluiddicht untergebracht sind.

8. System (10, 50) nach Anspruch 7, **dadurch gekennzeichnet, dass** das Gehäuse (12) einen Aufnahmeabschnitt (82) mit der Aufnahme (14) für das Aufnahmeelement (52), einen Grundabschnitt (84) und einen Deckelabschnitt (86) aufweist, wobei der Treibring (20) zwischen dem Aufnahmeabschnitt (82) und dem Grundabschnitt (84) angeordnet ist und wobei die Motoraufnahme (76) im Grundabschnitt (84) vorgesehen und mit dem Deckelabschnitt (86) verschließbar ist.

9. System (10, 50) nach einem der vorhergehenden Ansprüche, **dadurch gekennzeichnet, dass** der Treibring (20) ein oder mehrteilig ausgebildet ist.

10. System (10, 50) nach einem der vorhergehenden Ansprüche, **dadurch gekennzeichnet, dass** im Gehäuse (12) eine den Elektromotor (26) ansteuernde Elektronikeinheit (80)vorgesehen ist.

11. System (10, 50) nach einem der vorhergehenden Ansprüche, **dadurch gekennzeichnet, dass** am Treibring (20) Kontaktabschnitte (90) vorgesehen sind, die mit Dämpfungs- und/oder Krafterhaltungsmitteln (92) zusammenwirken.

12. System (10, 50) nach Anspruch 11, **dadurch gekennzeichnet, dass** im Gehäuse (12) Hohlzylinder (14) vorgesehen sind, in denen die Dämpfungs- und/oder Krafterhaltungsmitteln (92) angeordnet sind.
